# FASCICULE DE BREVET EUROPEEN

(11) **EP 2 498 520 B1**
(45) Date de publication et mention de la délivrance du brevet: **30.04.2014**
(21) Numéro de dépôt: 11305258.3
(22) Date de dépôt: 10.03.2011
(51) Int. Cl.: H04W 4/02

(54) **Procédé d'obtention de contenus vidéos issus de caméras et relatifs à un usager d'un équipement de communication, et dispositif associé**
Verfahren zum Erhalt von Videoinhalten aus Kameras und bezüglich eines Benutzers eines Kommunikationsgeräts, und entsprechende Vorrichtung
Procedure for obtaining video contents generated by cameras and relative to a communication equipment user, and associated device

(43) Date de publication de la demande: 12.09.2012
(73) Titulaire: Alcatel Lucent, 75007 Paris (FR)
(72) Inventeur: Senot, Christophe, 91620, NOZAY (FR); Picault, Jérome, 91620, NOZAY (FR)
(74) Mandataire: ALU Antw Patent Attorneys

(56) Documents cités:
- EP-A1- 1 061 712
- WO-A2-2009/044175
- FR-A1- 2 859 557
- US-A1- 2010 278 379
- US-B1- 6 931 254

## Description

### Domaine technique

L'invention concerne les enregistrements vidéos qui sont effectués par des caméras, et plus précisément l'obtention ainsi que l'éventuelle utilisation qui peuvent être faites de certains de ces enregistrements vidéos.

### Etat de l'art

Comme le sait l'homme de l'art, certaines caméras vidéos effectuent dans des zones d'observation des enregistrements vidéos qui sont susceptibles d'intéresser certains usagers d'équipements de communication mobiles.

On entend ici par "équipement de communication mobile" tout appareil, d'une part, disposant d'un module de communication capable de se connecter à au moins un réseau de communication non filaire, éventuellement de type pair-à-pair (ou "peer-to-peer"), afin d'établir des communications avec au moins un autre équipement de communication et/ou au moins un équipement de réseau, et, d'autre part, capable de présenter à son utilisateur des signaux ou contenus vidéos. Il pourra donc s'agir, par exemple, d'un téléphone mobile, éventuellement de type dit "intelligent" (ou "smartphone"), d'un ordinateur portable, d'un assistant personnel numérique (ou PDA), d'une tablette graphique numérique, d'un écran communicant, ou encore d'une console de jeux communicante.

Plusieurs solutions ont été proposées pour alerter un usager de la présence d'une caméra dans son environnement.

Ainsi, il a été proposé dans le document brevet WO 2010/027772 de détecter des caméras dans une zone où elles sont interdites d'enregistrement, en prenant plusieurs photographies de cette zone lorsqu'elle est illuminée, puis en localisant les caméras interdites en fonction de la réflexion particulière de leurs optiques.

Il a également été proposé dans les documents brevet GB 2372364 et US 7,398,104 de détecter les émissions que font certaines caméras non filaires lorsqu'elles transmettent leurs enregistrements vidéos à un réseau de communication non filaire. Les documents US2010/278379, EP1061712 et FR2859557 décrivent des procédés d'acquisition d'images localisées.

### Résumé de l'invention

Les solutions connues précitées présentent toutes au moins un inconvénient. En effet, soit elles nécessitent l'utilisation d'un dispositif d'illumination et de détection auxiliaire, relativement encombrant et onéreux, soit elles ne concernent que des caméras non filaires et donc ne peuvent pas détecter la présence de caméras filaires, ce qui limite notablement leur intérêt.

Par ailleurs, aucune solution connue ne permet de déterminer si l'usager d'un équipement de communication (mobile) se trouve effectivement dans la zone d'observation d'une caméra détectée, ce qui limite encore plus leur intérêt. En effet, l'usager est certes alerté de la présence d'une caméra dans son environnement, mais il ne sait pas si cette caméra l'a filmé et donc si il existe localement une trace de son passage. Par conséquent, l'usager doit, dans une premier temps, effectuer plusieurs opérations avec son équipement de communication mobile afin de tenter de se procurer l'enregistrement vidéo de la caméra détectée (sous réserve qu'il soit autorisé à le faire), puis il doit, dans un second temps, visionner cet enregistrement vidéo avec son équipement de communication mobile afin de déterminer si il se trouve ou non sur cet enregistrement vidéo et si ce dernier l'intéresse. On comprendra que ces opérations multiples s'avèrent contraignantes pour un usager, voire quasiment impossibles à effectuer lorsque l'usager utilise son équipement de communication mobile pour d'autres tâches.

On notera que ce dernier inconvénient rend particulièrement compliquée la génération dans l'équipement de communication d'un usager d'un contenu vidéo à partir d'une partie d'enregistrement vidéo téléchargée qui concerne cet usager. Or, une telle génération pourrait s'avérer utile à certains usagers qui disposent d'un site Internet individuel (ou "blog"), car elle leur permettrait d'enrichir de contenus vidéos leurs billets textuels agglomérés (au sein d'un blog), éventuellement de façon au moins partiellement automatisée, tout en protégeant leurs vies privées comme ils le souhaitent au moyen d'opérations telles que des suppressions ou des floutages de visages, par exemple.

L'invention a donc pour but d'améliorer la situation, en particulier en matière de détection de caméras dans le voisinage d'un usager d'un équipement de communication mobile.

Selon un premier aspect, l'invention propose un procédé tel qu'énoncé à la revendication 1.

Selon un deuxième aspect, l'invention propose un dispositif tel qu'énoncé à la revendication 17.

Un tel dispositif peut également et éventuellement comprendre des moyens de génération agencés pour générer un contenu vidéo à partir d'une partie d'enregistrement vidéo transmise sur requête à l'équipement de communication, et des moyens de contrôle agencés pour ordonner à l'équipement de communication de fournir un contenu vidéo généré à un site Internet (individuel ou collectif) choisi en vue de sa mise à disposition sous d'éventuelles conditions choisies.

Selon un troisième aspect, l'invention propose un équipement de communication qui, d'une première part, est propre à se connecter à un réseau de communication non filaire, d'une deuxième part, possède une position (géographique) déterminable, et, d'une troisième part, comprend un dispositif d'obtention d'enregistrements vidéos du type de celui présenté ci-avant.

### Brève description des dessins

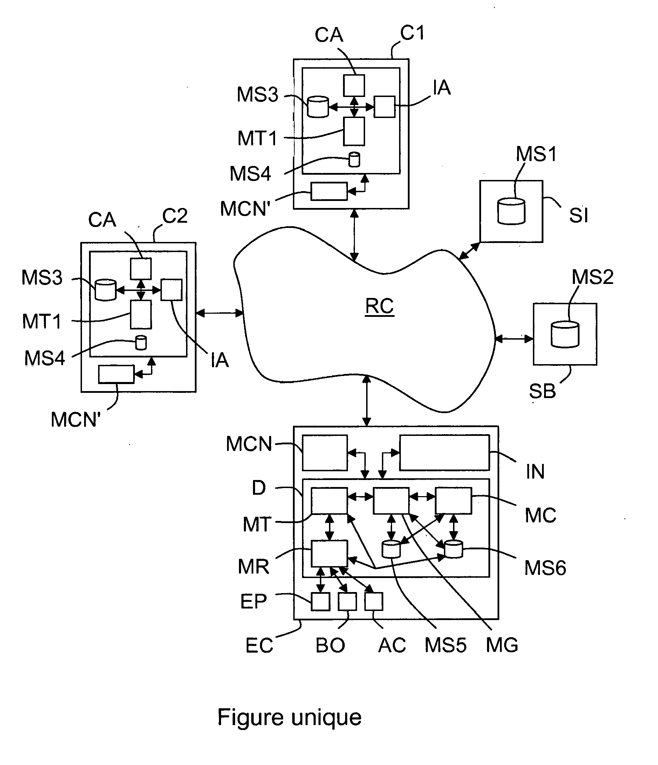

D'autres caractéristiques et avantages de l'invention apparaîtront à l'examen de la description détaillée ci-après, et du dessin annexé, sur lequel l'unique figure illustre de façon très schématique et fonctionnelle un réseau de communication auquel sont connectés un équipement de communication d'usager équipé d'un dispositif d'obtention d'enregistrements vidéos selon l'invention, deux caméras dont les enregistrements vidéos sont accessibles, un serveur d'informations relatives aux caméras, et un serveur de sites Internet individuels (ou blogs).

### Description détaillée

L'invention a notamment pour objet de permettre à des usagers d'équipements de communication mobiles EC d'obtenir des enregistrements (ou contenus) vidéos effectués par des caméras Ci et qui les concernent.

On notera que l'invention concerne n'importe quel type d'équipement de communication mobile EC dès lors qu'il dispose d'un module de communication MCN capable, d'une part, de se connecter à au moins un réseau de communication non filaire RC, éventuellement de type pair-à-pair (ou "peer-to-peer"), afin d'établir des communications avec au moins un autre équipement de communication et/ou au moins un équipement de réseau, et, d'autre part, de lire et utiliser des contenus vidéos. Il pourra donc s'agir, par exemple, d'un téléphone mobile, éventuellement de type dit "intelligent" (ou "smartphone"), d'un ordinateur portable, d'un assistant personnel numérique (ou PDA), d'une tablette graphique numérique, d'un écran communicant, ou encore d'une console de jeux communicante.

On considère dans ce qui suit, à titre d'exemple illustratif, que les équipements de communication EC des usagers sont capables d'établir des communications via un réseau de communication mobile (ou cellulaire). Mais, les équipements de communication EC des usagers pourraient être capables d'établir des communications via un réseau non filaire de type pair-à-pair (ou peer-to-peer).

On a schématiquement illustré sur l'unique figure un réseau de communication RC auquel sont connectés un équipement de communication mobile EC d'un usager, équipé d'un dispositif d'obtention d'enregistrements vidéos D selon l'invention, deux caméras Ci (i = 1 ou 2), un serveur SI stockant des informations relatives aux caméras Ci, et un serveur de blogs SB stockant par exemple des sites Internet individuels (ou blogs) appartenant à différents usagers, dont celui qui utilise l'équipement de communication mobile EC précité, ou bien un site d'un réseau social (par exemple de type Facebook).

On notera que dans l'exemple illustré sur l'unique figure, seul un unique réseau (de communication) RC est matérialisé. Mais, les différents équipements et serveurs pourraient être connectés à différents réseaux de communication interconnectés entre eux, et notamment à l'Internet.

Parmi les informations que peut stocker le serveur SI dans des moyens de stockage MS1, on peut notamment citer des positions (géographiques) connues de certaines caméras Ci et des identifiants de caméras correspondants.

Les positions des caméras Ci peuvent être, notamment, soit déclarées par leurs possesseurs, par exemple du fait d'une contrainte légale, soit fournies par des usagers qui les découvrent de façon collaborative.

Les moyens de stockage MS1 peuvent se présenter sous n'importe quelle forme connue de l'homme de l'art, et notamment sous la forme d'une mémoire, d'un fichier informatique ou d'une base de données.

Le serveur de blogs SB comprend des moyens de stockage MS2 dans lesquels il stocke, ici, des sites Internet individuels (ou blogs) qui appartiennent à différents usagers comportant un équipement de communication mobile EC. Ce serveur de blogs SB appartient, par exemple, à un éditeur de réseau social.

Ces moyens de stockage MS2 peuvent se présenter sous n'importe quelle forme connue de l'homme de l'art, et notamment sous la forme d'une mémoire, d'un fichier informatique ou d'une base de données.

Chaque caméra Ci est agencée de manière à enregistrer des images vidéos dans une zone d'observation qui dépend de ses caractéristiques techniques et de la configuration de son environnement.

Parmi les différentes caractéristiques, on peut notamment citer l'angle d'ouverture, la distance focale, la hauteur de fixation par rapport au sol, l'inclinaison par rapport à un plan horizontal, la désorientation par rapport à un plan vertical.

On notera que l'on appelle ci-après "données d'information" des données définissant des caractéristiques techniques d'une caméra Ci ou la configuration de l'environnement d'une caméra Ci.

Chaque caméra Ci comprend également un module de communication MCN' capable de se connecter à au moins un réseau de communication filaire ou non filaire notamment pour transmettre des parties au moins de ses enregistrements vidéos.

Comme illustré, chaque caméra Ci peut comporter des moyens de stockage MS3 dans lesquels elle stocke les données numériques qui définissent ses données d'information. Ces moyens de stockage MS3 peuvent se présenter sous n'importe quelle forme connue de l'homme de l'art, et notamment sous la forme d'une mémoire ou d'un fichier informatique.

Il est cependant préférable de stocker dans les moyens de stockage MS1 du serveur d'information SI les données d'information relatives à chaque caméra Ci répertoriée, en correspondance des position et identifiant de cette dernière (Ci). En effet, dans ce cas il est possible d'obtenir en une seule interrogation les position, identifiant et données d'information d'une caméra Ci.

Chaque caméra Ci peut également comporter, comme illustré, des moyens de stockage MS4 dans lesquels elle stocke les données numériques, définissant chaque enregistrement vidéo effectué, en correspondance d'une date et d'un horaire. Ces moyens de stockage MS4 peuvent se présenter sous n'importe quelle forme connue de l'homme de l'art, et notamment sous la forme d'une mémoire, d'un fichier informatique ou d'une base de données.

Chaque caméra Ci peut également comporter, comme illustré, une interface d'accès IA, de préférence de type API ("Application Programming Interface"), permettant à un équipement de communication EC ou un serveur d'accéder aux enregistrements vidéos qui sont éventuellement stockés dans ses moyens de stockage MS4.

Chaque caméra Ci peut également comporter, comme illustré, un contrôleur d'accès CA permettant à un équipement de communication EC ou un serveur d'accéder aux données d'information qui sont éventuellement stockées dans ses moyens de stockage MS3, et/ou de contrôler l'accès aux moyens de stockage MS4, et/ou, comme on le verra plus loin, de contrôler l'accès à un module de traitement MT1 local chargé d'effectuer, sur requête, au moins un traitement sur les enregistrements vidéos stockés dans les moyens de stockage MS4.

Il est important de noter que dans l'exemple décrit ci-après chaque caméra Ci stocke localement ses enregistrements vidéos. Par conséquent, les enregistrements vidéos doivent être obtenus auprès des caméras Ci, via leur interface d'accès IA et leur contrôleur d'accès CA. Mais, dans une variante, les caméras Ci peuvent être agencées pour transmettre les enregistrements vidéos qu'elles effectuent à un serveur qui est alors chargé de les stocker de façon centralisée en correspondance de leur identifiant de caméra. Dans ce cas, les caméras Ci n'ont plus vraiment besoin de comporter une interface d'accès IA et un contrôleur d'accès CA.

On notera que dans le cas d'un stockage centralisé des vidéos, l'interface d'accès IA d'une caméra Ci peut permettre de rediriger l'équipement de communication EC d'un utilisateur vers le serveur de vidéos si celui-ci n'est pas connu de cet équipement de communication EC (en fait, l'interface d'accès peut permettre un accès transparent, que le stockage des vidéos soit local ou distant). On notera également que l'on peut aussi envisager un stockage semi-distribué ou hybride, par exemple dans différents serveurs associés à différents opérateurs de réseau selon les propriétaires des caméras Ci, et dans ce cas l'interface d'accès IA peut permettre un accès transparent.

L'invention propose de mettre en oeuvre un procédé d'obtention d'enregistrements vidéos au sein d'une installation de communication du type de celle qui est illustrée non limitativement sur l'unique figure.

Un tel procédé comprend au moins trois étapes principales (i) à (iii).

Une première étape principale (i) consiste à déterminer la position du lieu où se trouve situé un équipement de communication EC.

Cette détermination peut se faire par tout moyen connu de l'homme de l'art. Ainsi, elle peut se faire au moyen d'un équipement de positionnement EP que comprend éventuellement l'équipement de communication EC. Un tel équipement de positionnement EP peut par exemple être de type GPS ("Global Positionning System" - positionnement par satellites). Mais, dans une variante, elle peut se faire par triangulation au sein du réseau RC ou par détection de connexion dans une micro ou femto cellule du réseau RC, par exemple. On notera que la technique utilisée pour cette détermination de position peut influer sur la précision des calculs ultérieurs qui utilisent ses résultats.

On notera également que chaque première étape principale (i) peut être effectuée soit automatiquement de façon périodique (c'est-à-dire selon une période prédéfinie par l'usager), soit sur requête de l'usager de l'équipement de communication EC lorsqu'il désire obtenir un enregistrement vidéo de l'endroit où il se trouve, si possible avec une preuve de sa présence.

Une deuxième étape principale (ii), du procédé selon l'invention, consiste à déterminer si il existe au moins une caméra Ci propre à fournir des enregistrements vidéos effectués dans une partie d'une zone d'observation qui est susceptible d'inclure un lieu déterminé lors d'une première étape principale (i), et accessibles via le réseau RC.

On notera que c'est le dispositif (d'obtention d'enregistrements vidéos) D, selon l'invention, qui est chargé d'effectuer cette deuxième étape principale (ii), ainsi qu'éventuellement de requérir la position de son équipement de communication EC lors de la première étape principale (i), lorsque celle-ci n'est pas communiquée de façon automatique (ici par l'équipement de positionnement EP).

Cette détermination se fait par envoi d'une requête, ici au serveur d'informations SI, via le réseau RC et au moyen du module de communication MCN de l'équipement de communication mobile EC.

A cet effet, le dispositif D comprend des moyens de recherche MR chargés des déterminations de caméra Ci.

Par exemple, les moyens de recherche MR peuvent comparer la position de l'équipement de communication EC, qui a été déterminée lors de la première étape principale (i), à des positions connues de caméras Ci qui sont stockées dans les moyens de stockage MS1 du serveur d'informations SI en correspondance des identifiants de caméra, afin de déterminer si il existe une caméra Ci qui est susceptible de se trouver dans le voisinage de l'équipement de communication EC. Puis, si une telle caméra Ci existe, les moyens de recherche MR sont agencés pour déterminer si cette caméra Ci offre une zone d'observation qui inclue la position déterminée de l'équipement de communication EC. Enfin, dans l'affirmative, les moyens de recherche MR sont agencés pour effectuer la troisième étape principale (iii) qui sera décrite plus loin, en utilisant l'identifiant de la caméra Ci qui a été déterminée.

On notera qu'afin de rendre plus précise la détermination d'une caméra Ci, il est particulièrement avantageux de déterminer également lors de la première étape (i) la trajectoire de l'équipement de communication EC.

Pour ce faire, on peut par exemple utiliser des données de vitesse représentatives de la vitesse en cours de l'équipement de communication EC, et des données de direction et de sens représentatives de la direction générale et du sens suivi par l'équipement de communication EC. Ces données de paramètres physiques (vitesse, direction, sens) peuvent être fournies par des équipements que comprend l'équipement de communication EC, comme par exemple un accéléromètre AC et une boussole BO, ou bien par un équipement de positionnement servant à la géolocalisation (par exemple de type GPS).

On notera que l'équipement de positionnement EP et/ou l'accéléromètre (ou analogue) AC et/ou la boussole (ou analogue) BO peuvent éventuellement faire partie du dispositif D.

On comprendra que lorsque les moyens de recherche MR disposent de la position, de la vitesse, de la direction et du sens de l'équipement de communication EC, ils peuvent calculer la trajectoire de ce dernier (EC), et donc, ils peuvent déterminer (lors d'une deuxième étape principale (ii)) si cette trajectoire va traverser (ou traverse) la zone d'observation d'une caméra Ci. Il est ainsi possible d'anticiper le passage d'un équipement de communication EC dans une zone d'observation d'une caméra Ci afin d'obtenir à l'avance le droit d'utiliser une partie de l'enregistrement vidéo de cette caméra Ci, ou bien d'avertir l'usager de l'équipement de communication EC de la possibilité d'obtenir une partie de l'enregistrement vidéo de cette caméra Ci.

On notera également que les moyens de recherche MR peuvent être agencés pour déterminer lors d'une deuxième étape principale (ii) la zone d'observation d'une caméra Ci en fonction des données d'informations qui sont relatives à cette caméra Ci et/ou à l'environnement de cette dernière Ci. Comme indiqué précédemment, ces données d'informations peuvent être, par exemple, obtenues auprès des moyens de stockage MS1 du serveur d'information SI en même temps que les position et identifiant de la caméra Ci considérée.

On comprendra qu'une fois que les moyens de recherche MR disposent des position et données d'informations d'une caméra Ci ils peuvent calculer ou au moins estimer la zone d'observation de cette caméra Ci. La précision de la zone d'observation déterminée dépend bien entendu du nombre et de la précision des données d'informations d'une caméra Ci.

On notera également que l'on peut assujettir la transmission d'une partie d'un enregistrement vidéo à la satisfaction d'un ensemble de règle(s) prédéfini. Dans ce cas, lors de la deuxième étape principale (ii) on n'autorise la transmission d'une partie d'un enregistrement vidéo qu'à condition que l'ensemble de règle(s) prédéfini soit satisfait.

Tout type de règle connu de l'homme de l'art et présentant une relation avec l'obtention d'un enregistrement vidéo peut être envisagé. Ainsi, il pourra par exemple s'agir d'une règle locale instaurée en raison d'une loi et relative à l'utilisation des enregistrements vidéos, ou d'une autorisation d'utiliser un enregistrement vidéo si et seulement si aucun tiers n'est reconnaissable ou lorsque chaque tiers a fourni l'autorisation d'utiliser des séquences vidéos sur lesquelles il apparaît (éventuellement partiellement flouté), ou d'une autorisation d'utiliser un enregistrement vidéo lorsque l'usager d'un équipement de communication EC dispose d'une autorisation d'utilisation des enregistrements vidéos qui le concernent (par exemple du fait que cet usager dispose d'un identifiant stocké dans une liste d'usagers autorisés), ou encore de la fourniture par l'équipement de communication EC d'un identificateur préalablement fourni lors d'une recherche de données d'informations relatives à une caméra Ci et/ou à l'environnement de cette dernière (Ci). Dans le cas de cette dernière règle, l'identificateur peut par exemple être un jeton (ou "token") qui est attribué spécifiquement par le serveur d'informations SI à un équipement de communication EC lorsque ce dernier lui transmet une requête destinée à déterminer au moins l'identifiant d'une caméra Ci dont la position est voisine de celle de cet équipement de communication EC, et qui est transmis à ce dernier (EC) dans le message répondant à sa requête.

Une troisième étape principale (iii), du procédé selon l'invention, consiste, lorsqu'une caméra Ci a été déterminée (ici par les moyens de recherche MR), à transmettre à l'équipement de communication EC, à la requête de ce dernier (EC) et via le réseau RC, une partie au moins de l'enregistrement vidéo effectué par cette caméra Ci pendant que l'équipement de communication EC est dans la zone d'observation de cette dernière (Ci).

Dans l'exemple non limitatif ici décrit, le dispositif D comprend des moyens de traitement MT qui sont chargés de générer une requête contenant au moins l'identifiant de la caméra Ci déterminée et une demande d'obtention d'une partie d'un enregistrement vidéo débutant aux date et horaire en cours, et de demander à son équipement de communication EC de transmettre cette requête à la caméra Ci identifiée. Mais, dans une variante, la requête pourrait être transmise à un serveur stockant, notamment, les enregistrements vidéos de cette caméra Ci.

Cette requête est envoyée via le réseau RC et au moyen du module de communication MCN de l'équipement de communication mobile EC.

On notera que l'on peut effectuer lors de la troisième étape principale (iii) au moins un traitement de la partie d'enregistrement vidéo requise en fonction d'instructions qui ont été fournies par l'équipement de communication EC. Ce (chaque) traitement peut être éventuellement effectué dans la caméra Ci qui a été déterminée lorsque cette dernière (Ci) comprend un module de traitement MT1 agencé à cet effet et qu'en outre elle stocke ses enregistrements vidéos. Cela est avantageux car cela permet de décharger le dispositif D d'un ou plusieurs traitements. En outre, la définition de chaque traitement requis peut être avantageusement transmise dans la requête d'obtention d'enregistrement vidéo.

Tout type de traitement d'images vidéo, connu de l'homme de l'art, relativement simple et rapide, peut être requis. Ainsi, il pourra s'agir, par exemple, du floutage de visages de personnes (ou tiers) détecté(e)s dans les images d'un enregistrement vidéo, de la sélection, manuelle et/ou automatique, d'au moins une séquence d'une partie d'un enregistrement vidéo (comme par exemple un résumé) lorsque cette dernière vidéo a une durée supérieure à un seuil prédéfini, de la suppression d'une partie d'un enregistrement vidéo, ou du partage avec au moins un tiers d'une partie d'un enregistrement vidéo.

Le procédé selon l'invention peut avantageusement comprendre deux autres étapes (iv) et (v).

Plus précisément, la quatrième étape (iv) consiste à générer dans l'équipement de communication EC un contenu vidéo à partir d'une partie d'enregistrement vidéo qui a été obtenue par transmission, et la cinquième étape (v) consiste à fournir un contenu vidéo qui a été généré lors d'une quatrième étape principale (iv) à un site Internet individuel de l'usager (ici stocké dans le serveur de blogs SB), en vue de sa mise à disposition sous d'éventuelles conditions choisies.

On entend ici par "contenu vidéo" un ensemble de données numériques définissant une séquence d'images vidéos et placées dans un format qui permet de les adjoindre à un blog et de les rendre utilisables par des lecteurs vidéos. Par conséquent, un contenu vidéo peut être constitué par une partie d'enregistrement vidéo téléchargée, éventuellement après traitement(s), ou bien par des données numériques résultant du traitement d'une partie d'enregistrement vidéo téléchargée.

Les éventuelles conditions de mise à disposition d'un contenu vidéo sont choisies par l'usager. Elles font par exemple partie de la politique d'accès à son blog qu'il a prédéfinie et qui est en vigueur, ou bien de politiques d'accès définies par un site d'un réseau social (comme par exemple Facebook) lorsque la vidéo est publiée par l'usager sur un service tiers.

Cette quatrième étape (iv) est réalisée par le dispositif D, et plus précisément par des moyens de génération MG qu'il comprend et qui sont agencés pour générer un contenu vidéo à partir d'une partie d'enregistrement vidéo transmise sur requête à l'équipement de communication EC.

On notera que l'on peut effectuer au moins un traitement dans l'équipement de communication EC durant cette quatrième étape (iv). Dans ce cas, ce sont de préférence les moyens de génération MG qui sont chargés de ces traitements.

Comme indiqué précédemment, tout type de traitement d'images vidéo, connu de l'homme de l'art, relativement simple et rapide, peut être effectué par les moyens de génération MG. Ces traitements peuvent être éventuellement complémentaires de ceux effectués dans une caméra Ci par les éventuels moyens de traitement MT1. Par conséquent, il pourra s'agir, par exemple, du floutage de visages de personnes (ou tiers) détecté(e)s dans les images d'une partie d'enregistrement vidéo téléchargée, de la sélection, manuelle ou automatique, d'au moins une séquence d'une partie d'enregistrement vidéo téléchargée (éventuellement d'un résumé) lorsque cette dernière vidéo a une durée supérieure à un seuil prédéfini, de la suppression d'une portion d'une partie d'enregistrement vidéo téléchargée, ou du partage avec au moins un tiers d'une partie d'enregistrement vidéo téléchargée.

De préférence, et comme illustré, le dispositif D comprend des moyens de stockage MS5 dans lesquels il stocke les contenus vidéos générés, ainsi qu'éventuellement les parties d'enregistrement vidéo téléchargées. Cela permet notamment d'effectuer des traitements complémentaires ou bien plus simplement le visionnage de contenus vidéos par l'usager quand il le souhaite. Ainsi, un usager peut, par exemple, constituer une longue séquence vidéo avec plusieurs contenus vidéos, éventuellement pour la publier dans son blog.

Ces moyens de stockage MS5 peuvent se présenter sous n'importe quelle forme connue de l'homme de l'art, et notamment sous la forme d'une mémoire, d'un fichier informatique ou d'une base de données.

La cinquième étape (v) est réalisée par le dispositif D, et plus précisément par des moyens de contrôle MC qu'il comprend et qui sont agencés pour ordonner à l'équipement de communication EC de fournir un contenu vidéo, qui a été généré par les moyens de génération MG, au site Internet individuel.

On notera que l'on peut effectuer l'une au moins des étapes (i) à (v) en fonction d'un ensemble d'instructions qui a été prédéfini par l'usager de l'équipement de communication EC.

Tout type d'instruction, connu de l'homme de l'art et permettant d'automatiser, éventuellement de façon contextuelle, une fonction ou une opération, peut être utilisé. Ainsi, il pourra s'agir de données définissant une période de détermination (lancement du procédé), ou un stockage systématique de parties d'enregistrements vidéos, éventuellement après au moins un traitement prédéfini, ou un stockage de parties d'enregistrements vidéos en fonction d'un contexte prédéfini, éventuellement après au moins un traitement prédéfini, ou les génération et fourniture automatiques d'un contenus vidéo, éventuellement en fonction d'un contexte prédéfini. A titre d'exemple contextuel, on peut envisager qu'une instruction requière le stockage d'une partie d'enregistrement vidéo chaque fois que l'équipement de communication EC se trouve situé dans un lieu nouveau où il n'était jamais passé auparavant. On peut également envisager qu'une instruction requière la réduction de la durée de chaque partie d'enregistrement vidéo à environ 10 secondes, éventuellement sauf lorsque l'équipement de communication EC se trouve situé dans un lieu nouveau où il n'était jamais passé auparavant, et dans ce cas la durée est portée à 30 secondes. On peut également envisager qu'une instruction requière le lancement du procédé seulement lorsque l'équipement de communication EC se trouve situé dans un lieu nouveau où il n'était jamais passé auparavant, ou bien dans un lieu de position prédéfinie. On peut également envisager qu'une instruction requière l'obtention systématique de l'autorisation de l'usager avant tout téléchargement d'une partie d'enregistrement vidéo ou avant tout stockage local d'une partie d'enregistrement vidéo téléchargée.

De préférence, et comme illustré, le dispositif D comprend des moyens de stockage MS6 dans lesquels il stocke chaque ensemble d'instructions prédéfini par l'usager. Les instructions d'un ensemble pouvant concerner plusieurs moyens (ou modules) du dispositif D, les moyens de stockage MS6 peuvent donc être accessibles à chacun de ses moyens (ou modules).

Ces moyens de stockage MS6 peuvent se présenter sous n'importe quelle forme connue de l'homme de l'art, et notamment sous la forme d'une mémoire ou d'un fichier informatique ou encore d'une base de données (notamment pour les règles).

On notera également que l'on peut notifier l'usager de l'équipement de communication EC chaque fois qu'il existe un enregistrement vidéo qui le concerne. Cela peut par exemple servir à l'avertir pour qu'il fournisse une instruction requérant la poursuite du procédé, éventuellement sous certaines conditions, ou l'arrêt du procédé, ou bien plus simplement pour qu'il sache qu'il va très prochainement disposer d'un nouveau contenu vidéo, éventuellement adjoint à son blog ou à un site d'un réseau social choisi, conformément à l'ensemble d'instructions qu'il a prédéfini et qui est en vigueur.

Les notifications peuvent être, par exemple, générées par les moyens de contrôle MC. On notera que ces derniers (MC) peuvent éventuellement comporter un moteur de règles (ou "rule engine") chargé de contrôler l'application de chaque instruction de l'ensemble prédéfini en vigueur.

On notera également que tous les échanges qui ont lieu entre l'usager et le dispositif D (dans les deux sens) se font via une interface homme/machine IN qui fait de préférence partie de l'équipement de communication EC. Mais, cette interface homme/machine IN pourrait faire partie du dispositif D.

On notera également que le dispositif D est préférentiellement réalisé sous la forme d'une combinaison de circuits électroniques et de modules logiciels (ou informatiques). Mais, il pourrait également être réalisé sous la forme de modules logiciels.

L'invention offre plusieurs avantages, parmi lesquels:
- elle peut permettre à un usager d'être alerté automatiquement de la présence de n'importe quel type de caméra (filaire ou non filaire), dès lors que la caméra est enregistrée dans une liste et que ses enregistrements vidéos sont accessibles,
- elle peut permettre à un usager d'être alerté automatiquement de l'obtention et du stockage d'un contenu vidéo,
- elle ne requiert aucun équipement externe complémentaire,
- elle permet d'enrichir les blogs de contenus vidéo, et plus généralement des réseaux sociaux contenant des contenus hybrides (pas seulement vidéos), éventuellement de façon totalement automatisée par programmation.

L'invention ne se limite pas aux modes de réalisation de dispositif d'obtention d'enregistrements vidéos, d'équipement de communication d'usager, et de procédé d'obtention d'enregistrements vidéos décrits ci-avant, seulement à titre d'exemple, mais elle englobe toutes les variantes que pourra envisager l'homme de l'art dans le cadre des revendications ci-après.

## Revendications

1. Procédé d'obtention d'enregistrements vidéos relatifs à un usager disposant d'un équipement de communication (EC) propre à se connecter à un réseau de communication non filaire (RC) et dont la position est déterminable, ledit procédé comprenant les étapes suivantes: i) déterminer la position du lieu où se trouve ledit équipement de communication (EC), ii) déterminer si il existe au moins une caméra (Ci) propre à fournir des enregistrements vidéos, d'une partie d'une zone d'observation susceptible d'inclure ledit lieu déterminé, accessibles via ledit réseau de communication (RC), et iii) en cas de détermination d'une telle caméra (Ci), transmettre audit équipement de communication (EC), via ledit réseau de communication (RC), une partie au moins d'un enregistrement vidéo effectué par cette caméra (Ci) pendant que ledit équipement de communication (EC) est dans sa zone d'observation, **caractérisé en ce que** l'on compare à l'étape ii) ladite position déterminée à l'étape i) à des positions connues de caméras (Ci) stockées dans des moyens de stockage (MS) en correspondance d'identifiants de caméra afin de déterminer si il existe une caméra (Ci) susceptible de se trouver dans le voisinage dudit équipement de communication (EC), puis, si une telle caméra (Ci) existe, on détermine si cette dernière offre une zone d'observation incluant ladite position déterminée, et dans l'affirmative on effectue l'étape iii) en utilisant l'identifiant de la caméra (Ci) déterminée, dans lequel on détermine à l'étape ii) la zone d'observation d'une caméra (Ci) en fonction de données d'informations relatives à cette caméra (Ci) et/ou à l'environnement de cette dernière (Ci), lesdites données d'informations étant choisies dans un groupe comprenant au moins l'angle d'ouverture de la caméra (Ci), la hauteur à laquelle est fixée la caméra (Ci), l'inclinaison de la caméra (Ci) par rapport à un plan horizontal, la désorientation de la caméra (Ci) par rapport à un plan vertical et la configuration de l'environnement dans lequel est installée la caméra (Ci).

2. Procédé selon la revendication 1, dans lequel on détermine également à l'étape i) la trajectoire dudit équipement de communication (EC), et on détermine à l'étape ii) si cette trajectoire va traverser ladite zone d'observation compte tenu de ladite position déterminée.

3. Procédé selon l'une des revendications 1 à 2, dans lequel on prévoit en outre une étape iv) dans laquelle on génère dans ledit équipement de communication (EC) un contenu vidéo à partir de ladite partie d'enregistrement vidéo transmise, et une étape v) dans laquelle on fournit ledit contenu vidéo généré à un site Internet individuel dudit usager en vue de sa mise à disposition sous d'éventuelles conditions choisies.

4. Procédé selon l'une des revendications 1 à 3, dans lequel on effectue automatiquement ladite étape i) de façon périodique.

5. Procédé selon l'une des revendications 1 à 3, dans lequel on effectue ladite étape i) sur requête de l'usager dudit équipement de communication (EC).

6. Procédé selon l'une des revendications 1 à 5, dans lequel on effectue l'une au moins desdites étapes i) à v) en fonction d'un ensemble d'instructions prédéfini par l'usager dudit équipement de communication (EC).

7. Procédé selon la revendication 6, dans lequel lesdites données d'instructions sont choisies dans un groupe comprenant au moins une période de détermination, un stockage systématique de parties d'enregistrements vidéos, éventuellement après au moins un traitement prédéfini, un stockage de parties d'enregistrements vidéos en fonction d'un contexte prédéfini, éventuellement après au moins un traitement prédéfini, et les génération et fourniture automatiques d'un contenu vidéo, éventuellement en fonction d'un contexte prédéfini.

8. Procédé selon l'une des revendications 1 à 7, dans lequel on effectue à l'étape iii) au moins un traitement de ladite partie de l'enregistrement vidéo en fonction d'instructions fournies par ledit équipement de communication (EC).

9. Procédé selon la revendication 8, dans lequel on effectue à l'étape iii) au moins un traitement dans ladite caméra (Ci) déterminée en fonction d'instructions transmises par ledit équipement de communication (EC).

10. Procédé selon la revendication 5 en combinaison avec l'une des revendications 8 et 9, dans lequel on effectue à l'étape iv) au moins un traitement dans ledit équipement de communication (EC).

11. Procédé selon l'une des revendications 8 à 10, dans lequel chaque traitement est choisi dans un groupe comprenant au moins un floutage de visages de personnes détectées dans les images de l'enregistrement vidéo, la sélection, manuelle et/ou automatique, d'au moins une séquence d'une partie d'un enregistrement vidéo lorsque cette dernière a une durée supérieure à un seuil prédéfini, la suppression d'une partie d'un enregistrement vidéo, et le partage avec au moins un tiers d'une partie d'un enregistrement vidéo.

12. Procédé selon l'une des revendications 1 à 11, dans lequel, en présence d'une caméra (Ci) transmettant ses enregistrements vidéos à des moyens de stockage centralisés, on recherche à l'étape iii), dans ces moyens de stockage centralisés, l'enregistrement vidéo de la caméra (Ci) déterminée.

13. Procédé selon l'une des revendications 1 à 12, dans lequel, en présence d'une caméra (Ci) stockant ses enregistrements vidéos, on recherche à l'étape iii) l'enregistrement vidéo dans cette caméra (Ci).

14. Procédé selon l'une des revendications 1 à 13, dans lequel on notifie l'usager dudit équipement de communication (EC) lorsqu'il existe un enregistrement vidéo le concernant.

15. Procédé selon l'une des revendications 1 à 14, dans lequel on autorise à l'étape ii) la transmission d'une partie d'un enregistrement vidéo lorsqu'un ensemble de règle(s) prédéfini est satisfait.

16. Procédé selon la revendication 15, dans lequel chaque règle est choisie dans un groupe comprenant au moins une règle locale instaurée et relative à l'utilisation des enregistrements vidéos, une autorisation d'utiliser un enregistrement vidéo en l'absence de tiers reconnaissable ou en cas d'autorisation fournie par un tiers reconnaissable, une autorisation d'utiliser un enregistrement vidéo lorsque l'usager d'un équipement de communication (EC) dispose d'une autorisation d'utilisation des enregistrements vidéos qui le concernent, et la fourniture par l'équipement de communication (EC) d'un identificateur préalablement fourni lors d'une recherche de données d'informations relatives à une caméra (Ci) et/ou à l'environnement de cette dernière (Ci).

17. Dispositif (D) d'obtention d'enregistrements vidéos effectués par des caméras (Ci), pour un équipement de communication (EC) propre à se connecter à un réseau de communication non filaire (RC) et dont la position est déterminable, ledit dispositif (D) comprenant i) des moyens de recherche (MR) agencés pour déterminer si il existe au moins une caméra (Ci) propre à fournir des enregistrements vidéos, d'une partie d'une zone d'observation susceptible d'inclure un lieu où se trouve situé ledit équipement de communication (EC), accessibles via ledit réseau de communication (RC), et ii) des moyens de traitement (MT) agencés, en cas de détermination d'une telle caméra (Ci), pour requérir la transmission audit équipement de communication (EC), via ledit réseau de communication (RC), d'une partie au moins d'un enregistrement vidéo effectué par ladite caméra (Ci) déterminée pendant que ledit équipement de communication (EC) est dans sa zone d'observation, **caractérisé en ce que** les moyens de recherches (MR) sont configurés pour comparer la position de l'équipement de communication (EC) à des positions connues de caméras (Ci) stockées dans des moyens de stockage (MS) en correspondance d'identifiants de caméra afin de déterminer si il existe une caméra (Ci) susceptible de se trouver dans le voisinage dudit équipement de communication (EC), puis, si une telle caméra (Ci) existe, pour déterminer si cette dernière offre une zone d'observation incluant ladite position, la zone d'observation d'une caméra (Ci) étant déterminée en fonction de données d'informations relatives à cette caméra (Ci) et/ou à l'environnement de cette dernière (Ci), lesdites données d'informations étant choisies dans un groupe comprenant au moins l'angle d'ouverture de la caméra (Ci), la hauteur à laquelle est fixée la caméra (Ci), l'inclinaison de la caméra (Ci) par rapport à un plan horizontal, la désorientation de la caméra (Ci) par rapport à un plan vertical et la configuration de l'environnement dans lequel est installée la caméra (Ci), et les moyens de traitement (MT) sont configurés pour, dans l'affirmative, requérir ladite transmission en utilisant l'identifiant de la caméra (Ci) déterminée.

18. Dispositif selon la revendication 17, comprenant en outre des moyens de génération (MG) agencés pour générer un contenu vidéo à partir d'une partie d'enregistrement vidéo transmise sur requête audit équipement de communication (EC), et des moyens de contrôle (MC) agencés pour ordonner audit équipement de communication (EC) de fournir un contenu vidéo généré à un site Internet choisi en vue de sa mise à disposition sous d'éventuelles conditions choisies.

19. Equipement de communication (EC) propre à se connecter à un réseau de communication non filaire (RC), dont la position est déterminable, et comprenant un dispositif d'obtention d'enregistrements vidéos (D) selon l'une des revendications 17 et 18.

## Patentansprüche

1. Verfahren zum Erhalten von Videoaufzeichnungen bezüglich eines über ein Kommunikationsgerät (EC), welches für die Anbindung an ein drahtloses Kommunikationsnetzwerk (RC) ausgelegt ist und dessen Position ermittelt werden kann, verfügenden Benutzers, wobei das Verfahren die folgenden Schritte umfasst: i) Ermitteln der Position, in welcher sich das besagte Kommunikationsgerät (EC) befindet, ii) Ermitteln, ob mindestens eine Kamera (Ci) vorhanden ist, welche geeignet ist, über das besagte Kommunikationsnetzwerk (RC) zugängliche Videoaufzeichnungen eines Teils eines Beobachtungsbereichs, welcher gegebenenfalls den besagten ermittelten Ort einschließt, bereitzustellen, und iii) wenn eine solche Kamera (Ci) ermittelt wird, Übertragen, über das besagte Kommunikationsnetzwerk (RC), mindestens eines Teils einer Videoaufzeichnung, welche von dieser Kamera (Ci) aufgenommen wurde, während sich das besagte Kommunikationsgerät (EC) in seinem Beobachtungsbereich befindet, an das besagte Kommunikationsgerät (EC), **dadurch gekennzeichnet, dass** mit in Schritt ii) die besagte in Schritt i) ermittelte Position mit bekannten Positionen von Kameras (Ci), die in Speichermitteln (MS) in Übereinstimmung mit Kamerakennungen gespeichert sind, vergleicht, um zu ermitteln, ob eine sich gegebenenfalls in der Nachbarschaft des besagten Kommunikationsgeräts (EC) befindliche Kamera (Ci) vorhanden ist, und dass man anschließend, wenn eine solche Kamera (Ci) vorhanden ist, ermittelt, ob letztere einen Beobachtungsbereich bietet, welcher die besagte ermittelte Position einschließt, und man, wenn dies der Fall ist, den Schritt iii), in welchem man in Schritt ii) den Beobachtungsbereich einer Kamera (Ci) in Abhängigkeit von diese Kamera (Ci) und/oder die Umgebung dieser Kamera (Ci) betreffenden Informationsdaten unter Verwendung der Kennung der ermittelten Kamera (Ci) durchführt, wobei die besagten Informationsdaten in der Gruppe zumindest umfassend den Öffnungswinkel der Kamera (Ci), die Höhe, in welcher die Kamera (Ci) angebracht ist, die Neigung der Kamera (Ci) im Verhältnis zu einer horizontalen Ebene, die falsche Orientierung der Kamera (Ci) im Verhältnis zu einer vertikalen Ebene, und die Konfiguration der Umgebung, in welcher die Kamera (Ci) installiert ist, ausgewählt werden.

2. Verfahren nach Anspruch 1, wobei man in Schritt i) ebenfalls die Strecke des besagten Kommunikationsgeräts (EC) ermittelt, und wobei man in Schritt ii) ermittelt, ob diese Strecke angesichts der besagten ermittelten Position durch den besagten Beobachtungsbereich führen wird.

3. Verfahren nach einem der Ansprüche 1 bis 2, wobei man weiterhin einen Schritt iv), in welchem man in dem besagten Kommunikationsgerät (EC), ausgehend von dem besagten übertragenen Teil der Videoaufzeichnung, einen Videoinhalt erzeugt, und einen Schritt v), in welchem man den besagten erzeugten Videoinhalt an eine individuelle Website des besagten Benutzers zu dessen Bereitstellung unter eventuellen Bedingungen liefert, vorsieht.

4. Verfahren nach einem der Ansprüche 1 bis 3, wobei man den besagten Schritt i) automatisch periodisch durchführt.

5. Verfahren nach einem der Ansprüche 1 bis 3, wobei man den besagten Schritt i) auf Anforderung des Benutzers des besagten Kommunikationsgeräts (EC) durchführt.

6. Verfahren nach einem der Ansprüche 1 bis 5, wobei man mindestens einen der besagten Schritte i) bis v) in Abhängigkeit von einem vom Benutzer des besagten Kommunikationsgeräts (EC) vordefinierten Satz von Anweisungen durchführt.

7. Verfahren nach Anspruch 6, wobei die besagten Anweisungsdaten in einer Gruppe zumindest umfassend eine Periode für die Ermittlung, eine systematische Speicherung von Teilen von Videoaufzeichnungen, eventuell nach mindestens einer vordefinierten Bearbeitung, eine Speicherung von Teilen von Videoaufzeichnungen in Abhängigkeit von einem vordefinierten Kontext, eventuell nach mindestens einer vordefinierten Bearbeitung, und das automatische Erzeugen und Bereitstellen eines Videoinhalts in Abhängigkeit von einem vordefinierten Kontext, ausgewählt werden.

8. Verfahren nach einem der Ansprüche 1 bis 7, wobei man in Schritt iii) mindestens eine Bearbeitung des besagten Teils der Videoaufzeichnung in Abhängigkeit von von dem besagten Kommunikationsgerät (EC) gelieferten Anweisungen durchführt.

9. Verfahren nach Anspruch 8, wobei man in Schritt iii) mindestens eine Bearbeitung in der besagten ermittelten Kamera (Ci) in Abhängigkeit von von dem besagten Kommunikationsgerät (EC) übertragenen Anweisungen durchführt.

10. Verfahren nach Anspruch 5 in Kombination mit einem der Ansprüche 8 und 9, wobei man in Schritt iv) mindestens eine Bearbeitung in dem besagten Kommunikationsgerät (EC) durchführt.

11. Verfahren nach einem der Ansprüche 8 bis 10, wobei jede Bearbeitung in einer Gruppe mindestens umfassend ein Unkenntlichmachen der Gesichter von in den Bildern der Videoaufzeichnung erscheinenden Personen, die manuelle und/oder automatische Auswahl mindestens einer Sequenz eines Teils einer Videoaufzeichnung, wenn die Dauer dieser Videoaufzeichnung einen vordefinierten Grenzwert überschreitet, das Löschen eines Teils einer Videoaufzeichnung und das Teilen eines Teils einer Videoaufzeichnung mit mindestens einem Dritten ausgewählt wird.

12. Verfahren nach einem der Ansprüche 1 bis 11, wobei man im Fall der Präsenz einer Kamera (Ci), welche ihre Videoaufzeichnungen an zentrale Speichermittel überträgt, in Schritt iii) die Videoaufzeichnung der ermittelten Kamera (Ci) aus diesen zentralen Speichermitteln abruft.

13. Verfahren nach einem der Ansprüche 1 bis 12, wobei man im Fall der Präsenz einer Kamera (Ci), welche ihre Videoaufzeichnungen speichert, in Schritt iii) die Videoaufzeichnung aus dieser Kamera (Ci) abruft.

14. Verfahren nach einem der Ansprüche 1 bis 13, wobei man den Benutzer des besagten Kommunikationsgeräts (EC) benachrichtigt, wenn eine ihn betreffende Videoaufzeichnung besteht.

15. Verfahren nach einem der Ansprüche 1 bis 14, wobei man in Schritt ii) die Übertragung eines Teils einer Videoaufzeichnung genehmigt, wenn die/alle vordefinierte(n) Regel(n) erfüllt ist/sind.

16. Verfahren nach Anspruch 15, wobei jede Regel in einer Gruppe mindestens umfassend eine eingeführte lokale Regel in Bezug auf die Verwendung von Videoaufzeichnungen, eine Genehmigung für die Verwendung einer Videoaufzeichnung, wenn diese keine erkennbare dritte Person enthält oder im Fall einer von der erkennbaren dritten Person erteilten Genehmigung, eine Genehmigung für die Verwendung einer Videoaufzeichnung, wenn der Benutzer eines Kommunikationsgeräts (EC) über eine Genehmigung zur Verwendung von ihn betreffenden Videoaufzeichnungen verfügt, und das Bereitstellen, durch das Kommunikationsgerät (EC), einer vorher während eines Abrufs von eine Kamera (Ci) und/oder die Umgebung dieser Kamera (Ci) betreffenden Kennung ausgewählt wird.

17. Vorrichtung (D) zum Erhalten von von Kameras (Ci) aufgenommenen Videoaufzeichnungen für ein Kommunikationsgerät (EC), welches für die Anbindung an ein drahtloses Kommunikationsnetzwerk (RC) ausgelegt ist und dessen Position ermittelt werden kann, wobei die Vorrichtung (D) i) Suchmittel (MR), welche dazu ausgelegt sind, zu ermitteln, ob mindestens eine Kamera (Ci) vorhanden ist, die geeignet ist, über das besagte Kommunikationsnetzwerk (RC) zugängliche Videoaufzeichnungen eines Teils eines Beobachtungsbereichs, welcher gegebenenfalls einen Ort, an welchem sich das besagte Kommunikationsgerät (EC) befindet, einschließt, bereitzustellen, und ii) Bearbeitungsmittel (MT), welche dazu ausgelegt sind, im Fall der Ermittlung einer solchen Kamera (Ci), die Übertragung, über das besagte Kommunikationsnetzwerk (RC), mindestens eines Teils einer Videoaufzeichnung, welche der ermittelten Kamera (Ci) aufgenommen wurde, während sich das besagte Kommunikationsgerät (EC) in seinem Beobachtungsbereich befindet, an das besagte Kommunikationsgerät (EC), anzufordern, umfasst, **dadurch gekennzeichnet, dass** die Suchmittel (MR) dafür konfiguriert sind, die Position des Kommunikationsgeräts (EC) mit in den Speichermitteln (MS) in Übereinstimmung mit Kamerakennungen gespeicherten bekannten Positionen von Kameras (Ci) zu vergleichen, um zu ermitteln, ob eine sich gegebenenfalls in der Nachbarschaft des besagten Kommunikationsgeräts (EC) befindliche Kamera (Ci) vorhanden ist, und um anschließend, wenn eine solche Kamera (Ci) vorhanden ist, zu ermitteln, ob letztere einen Beobachtungsbereich bietet, welcher die besagte Position einschließt, wobei der Beobachtungsbereich einer Kamera (Ci) in Abhängigkeit von diese Kamera (Ci) und/oder die Umgebung dieser Kamera (Ci) betreffenden Informationsdaten ermittelt wird, wobei die besagten Informationsdaten in der Gruppe zumindest umfassend den Öffnungswinkel der Kamera (Ci), die Höhe, in welcher die Kamera (Ci) angebracht ist, die Neigung der Kamera (Ci) im Verhältnis zu einer horizontalen Ebene, die falsche Orientierung der Kamera (Ci) im Verhältnis zu einer vertikalen Ebene, und die Konfiguration der Umgebung, in welcher die Kamera (Ci) installiert ist, ausgewählt werden, und wobei die Bearbeitungsmittel (MT) dafür konfiguriert sind, die besagte Übertragung unter Verwendung der Kennung der ermittelten Kamera (Ci) anzufordern, wenn dies der Fall ist.

18. Vorrichtung nach Anspruch 17, weiterhin umfassend Erzeugungsmittel (MG), welche dazu ausgelegt sind, ausgehend von einem auf Anforderung an das besagte Kommunikationsgerät (EC) übertragenen Teil einer Videoaufzeichnung einen Videoinhalt zu erzeugen, und Steuermittel (MC), welche dazu ausgelegt sind, dem besagten Kommunikationsgerät (EC) zu befehlen, einen erzeugten Videoinhalt an eine ausgewählten Website im Hinblick auf dessen Bereitstellung unter eventuellen Bedingungen zu liefern .

19. Kommunikationsgerät (EC), welches für die Anbindung an ein drahtloses Kommunikationsnetzwerk (RC) ausgelegt ist und dessen Position ermittelt werden kann, umfassend eine Vorrichtung zum Erhalten von Videoaufzeichnungen (D) gemäß einem der Ansprüche 17 und 18.

## Claims

1. A method for obtaining video recordings related to a user having a communication device (EC) that is capable of connecting to a wireless communication network (RC) and whose position can be determined, said method comprising the following steps: i) determining the position of the location where said communication device (EC) is located, ii) determining whether there is at least one camera (Ci) capable of providing video recordings, of a part of an observation area that is likely to include said determined location, accessible via said communication network (RC), and iii) if such a camera (Ci) is determined to exist, transmitting to said communication device (EC), via said communication network (RC), at least part of a video recording made by that camera (Ci) while the communication device (EC) is in its observation area, **characterized in that** during step ii) said position determined during step i) is compared to known camera (Ci) positions stored within storage means (MS) as matches for camera identifiers in order to determine whether there is a camera (Ci) that is likely to be in the vicinity of said communication device (EC), then, if such a camera (Ci) exists, it is determined whether it offers an observation area that includes said determined position, and if so, step iii) is performed using the identifier of the determined camera (Ci), wherein during step ii) the observation area of a camera (Ci) is determined based on information data related to that camera (Ci) and/or to the environment thereof, said information data being chosen from a group comprising at least the aperture angle of the camera (Ci), the height at which the camera (Ci) is fixed, the tilt of the camera (Ci) relative to a horizontal plane, the vertical disorientation of the camera (Ci) relative to a vertical plane, and the configuration of the environment in which the camera (Ci) is installed.

2. A method according to claim 1, wherein the trajectory of said communication device (EC) is also determined during step i), and it is determined whether that trajectory ii) will pass through said observation area, taking into account said determined position.

3. A method according to one of the claims 1 to 2, wherein a step iv) is also provided, during which video content is generated within said communication device (EC) based on said transmitted video recording part, and a step v) is also provided, during which said generated video content is provided to an individual website of said user so that it can be made available under possible chosen conditions.

4. A method according to one of the claims 1 to 3, wherein said step i) is automatically performed periodically.

5. A method according to one of the claims 1 to 3, wherein said step i) is performed upon the request of the user of said communication device (EC).

6. A method according to one of the claims 1 to 5, wherein at least one of said steps i) to v) is performed based on a set of instructions predefined by the user of such communication device (EC).

7. A method according to claim 6, wherein said instruction data is chosen from a group comprising at least one determination period, video recording parts being systematically stored, potentially after at least one predefined processing, video recording parts being stored based on a predefined context, potentially after at least one predefined processing, and the automatic generating and provision of video content, potentially based on a predefined context.

8. A method according to one of the claims 1 to 7, wherein during step iii) said video recording part is processed at least once based on instructions provided by said communication device (EC).

9. A method according to claim 8, wherein processing is performed at least once during step iii) within said camera (Ci) based on instructions transmitted by said communication device (EC).

10. A method according to claim 5 in combination with one of the claims 8 and 9, wherein processing is performed at least once during step iv) within said communication device (EC).

11. A method according to one of the claims 8 to 10, wherein all processing is chosen from a group comprising at least the blurring of faces of people detected in the images of the video recording, the manual and/or automatic selection of at least one sequence of a part of a video recording when that part runs longer than a predefined threshold, the deletion of a part of a video recording, and the sharing with at least one third party of a part of a video recording.

12. A method according to one of the claims 1 to 11, wherein, in the presence of a camera (Ci) transmitting its video recordings to centralized storage means, the video recording from the determined camera (Ci) is searched for during step iii) in those centralized storage means.

13. A method according to one of the claims 1 to 12, wherein, in the presence of a camera (Ci) storing its video recordings, the video recording is searched for during step iii) in that camera (Ci).

14. A method according to one of the claims 1 to 13, wherein the user of said communication device (EC) is notified when there is a video recording concerning him or her.

15. A method according to one of the claims 1 to 14, wherein during step iii) the transmission of a part of a video recording is allowed when a set of predefined rule(s) is met.

16. A method according to claim 15, wherein each rule is chosen from a group comprising at least one instituted local rule related to the use of video recordings, a permission to use a video recording in the absence of a recognizable third-party or if permission is provided by a recognizable third-party, a permission to use a video recording when the user of a communication device (EC) has permission to use the video recordings concerning him or her, and the providing by the communication device (EC) of an identifier previously provided during an information data search related to a camera (Ci) and/or to the environment of that camera (Ci).

17. An apparatus (D) for obtaining video recordings made by cameras (Ci), for a communication device (EC) that is capable of connecting to a wireless communication network (RC) and whose position can be determined, said apparatus comprising i) means of search (MR) arranged to determine whether there is at least one camera (Ci) capable of providing video recordings, of a part of an observation area that is likely to include said determined location, accessible via said communication network (RC), and ii) means of processing (MT) arranged, if such a camera (Ci) is determined to exist, to request the transmission to said communication device (EC), via said communication network (RC), of at least part of a video recording made by said determined camera (Ci) while the communication device (EC) is in its observation area, **characterized in that** the means of search (MR) are configured to compare the position of the communication device (EC) to known positions of cameras (Ci) stored within storage means (MS) as matches for camera identifiers in order to determine whether there is a camera (Ci) that is likely to be in the vicinity of said communication device (EC), then, if such a camera (Ci) exists, to determine whether it offers an observation area that includes said position, the observation area of a camera (Ci) being determined based on information data related to that camera (Ci) and/or to the environment thereof, said information data being chosen from a group comprising at least the aperture angle of the camera (Ci), the height at which the camera (Ci) is fixed, the tilt of the camera (Ci) relative to a horizontal plane, the vertical disorientation of the camera (Ci) relative to a vertical plane, and the configuration of the environment in which the camera (Ci) is installed, and means of processing (MT) are configured, if that observation area exists, to request said transmission using the identifier of the determined camera (Ci).

18. An apparatus according to claim 17, further comprising means of generation (MG) arranged to generate video content from a video recording part transmitted upon request to said communication device (EC), and means of control (MC) arranged to order said communication device (EC) to provide generated video content to a chosen website so that it can be made available under possible chosen conditions.

19. A communication device (EC) capable of connecting to a wireless network (RC), whose position can be determined, and comprising an apparatus (D) for obtaining video recordings according to one of the claims 17 and 18.
